# EUROPEAN PATENT SPECIFICATION

(11) **EP 3 708 461 B1**
(45) Date of publication and mention of the grant of the patent: **21.06.2023**
(21) Application number: 20160711.6
(22) Date of filing: 03.03.2020
(51) Int. Cl.: B62B 7/06, B62B 9/10

(54) **DETACHABLE AND FOLDABLE SEAT**
ABNEHMBARER UND FALTBARER SITZ
SIÈGE AMOVIBLE ET PLIABLE

(30) Priority: 11.03.2019 CN 201920304541 U
(43) Date of publication of application: 16.09.2020
(73) Proprietor: Yojin Industrial Corp., Chia i Hsien (TW)
(72) Inventor: LIN, Ping-Ching, TAI PAO HSIANG, CHIA I HSIEN (TW)
(74) Representative: Hellmich, Wolfgang

(56) References cited:
- CN-U- 206 856 772
- DE-U1-202018 104 948
- GB-A- 2 516 906

## Description

The present invention relates generally to a seat that can be attached to and detached from the carriage frame, and more particularly to a seat structure which, upon folding, can drive the carriage frame to fold simultaneously, and in which, the seat back can be tilted and integrated into one body with the carriage frame, facilitating the operation of adjustment and folding. Detachable seats comprising a seat back frame, a handhold frame, a seat base and a frame connector, wherein the seat back frame, the handhold frame and the seat base are configured with pivot rotation parts to be linked with the frame connector through pivotal connection are known from DE 20 2018 104 948 U1.

Previously, in a baby carriage, the seat part and the frame part are fixed together. In later designs, the seat part is separated from the frame and can be attached to or detached from the frame as needed, and the seat can be attached to the frame facing forward or backward, so that the caregiver can take care of the baby more closely as needed.

Among the existing baby carriages with a detachable seat, some have a foldable seat and also a foldable carriage frame. However, before folding the carriage frame, the seat must be firstly detached from the frame. This not only causes inconvenient operation for the user, but also makes it inconvenient when putting away the seat and the frame.

Hence, some inventors proposed new designs for the combined carriage frame and seat to be folded together simultaneously. Examples are Patents No. CN104828119A, CN106541977A, CN207106577U etc. Although the final purpose of the various simultaneous folding methods disclosed in the above inventions are for the carriage frame and seat to be folded together simultaneously, they are operated differently due to different structural designs. In some designs, the structure is not stable enough during operation. While in some other designs, the structure is too complicated, resulting in difficulty in manufacturing and assembly. Moreover, in order for the seat back to be adjusted, an extra mechanism must be adopted. The adjustment of the seat back cannot be integrated with the folding of the carriage frame and seat. These problems will need to be solved.

DE 20 2018 104948 U1 discloses an easily portable stroller comprising a detachable seat and a seat folding device consisting of a seat holder, a rear plate connecting element, a handle connecting element and a lower plate connecting element. During daily use of the seat, the baby itself presses the lower plate of the seat, so that the lower plate cannot be rotated and the safety of the seat is ensured. The seat engages with the stroller frame through the seat holder located on both sides, so that the seat can be disassembled and turned over to meet all usage requirements.

CN 206 856 772 U discloses a foldable child stroller seat with armrests. The stroller comprises a backrest, a seat portion, an armrest, and the left and right sides of the backrest. The lower end is provided with a backrest rotating seat. The left and right rear ends of the seat part are provided with seat part rotating seats. The left and right rear ends of the armrest are provided with armrest rotating seats. The side seat swivel seat is disposed between the armrest swivel seat and the backrest swivel seat. The backrest swivel seat, the seat swivel seat, and the armrest swivel seat are pivotally connected to each other.

In order to overcome the problem of incomplete integration during the linked folding of the carriage frame and seat, this invention provides a detachable seat of the independent claim.

The beneficial efficacy of the present invention is as follows: through the pivot connection between the seat back frame, the handhold frame, the seat base and the frame connector, and through the linked movement of the unlocking driver, the seat clamping piece, the pivot rotation part of the handhold frame, as well as the pivot rotation part of the seat base, the seat can not only be operated independently, but also be folded together with the carriage frame. The folding operation becomes simpler and easier.
Fig.1 is an exploded perspective view of the present invention, showing connection between the carriage frame and the seat.
Fig.2 is a partial view of the linking position between the carriage frame and the seat of the present invention.
Fig.3 is a perspective view of the seat of the present invention.
Fig.4 is a partial exploded view of the present invention, showing the connection between the seat back frame, the handhold frame, the seat base and the frame connector of the seat.
Fig.5 is more detailed exploded view of the present invention, showing the connection between the seat back frame, the handhold frame, the seat base and the frame connector of the seat.
Fig.6 is a partial exploded view in another direction of the present invention showing the connection between the seat back frame, the handhold frame, the seat base and the frame connector of the seat.
Fig.7 is a more detailed exploded view in another direction of the present invention showing the connection between the seat back frame, the handhold frame, the seat base and the frame connector of the seat.
Fig.8 is a schematic view of the present invention, with the pivot rotation part of the seat back frame of the seat housing an unlocking driver.
Fig.9 is a relational view of the present invention between the pivot rotation part of the seat base and the unlocking driver of the seat.
Fig.10 is a sectional view of the positions between the seat back frame, the handhold frame, the seat base and the frame connector of the seat of the present invention.
Fig.11 is a schematic view of the present invention when the inclination of the seat back frame needs adjustment.
Fig.12 is a schematic view of the present invention after the unlocking driver housed inside the pivot rotation part of the seat back frame is pulled.
Fig.13 is an operational view at the position of pivot rotation part of the seat base of the present invention after the unlocking driver is pulled.
Fig.14 is a state view of Fig.10 after the unlocking driver is pulled.
Fig.15 is a schematic view of the adjustment of the inclination of the seat back frame of the seat of the present invention.
Fig.16 is a schematic view of the present invention after the seat back frame moves close toward the handhold frame of the seat.
Fig.17 is an operational view of the handhold locker on the seat and the turning of the unlocking driver when the seat back frame of the present invention moves close to the handhold frame.
Fig.18 is a schematic view of the present invention showing the state between the handhold locker and the pivot rotation part of the handhold frame after sinking, as well as the relation between the unlocking driver and the seat clamping piece after turning.
Fig.19 is a schematic view of the present invention when the handhold frame is unlocked and is turned together with the seat back frame to join with the seat base.
Fig.20 is a schematic view of the present invention when the unlocking driver shown in Fig.18 is turned and its axial pressing surface pushes the seat clamping piece in the axial direction.
Fig.21 is a side view of the present invention when the seat back frame, the handhold frame and the seat base of the seat are folded together;
Fig.22 is a schematic view of the present invention showing folding of the seat together with the carriage frame.
Fig.23 is a schematic view of the present invention when the frame connector of the seat and the seat connector of the carriage frame are combined together.
Fig.24 is a schematic view of the present invention when the unlocking component on the frame connector extends out and drives the unlocking linkage component on the seat connector.

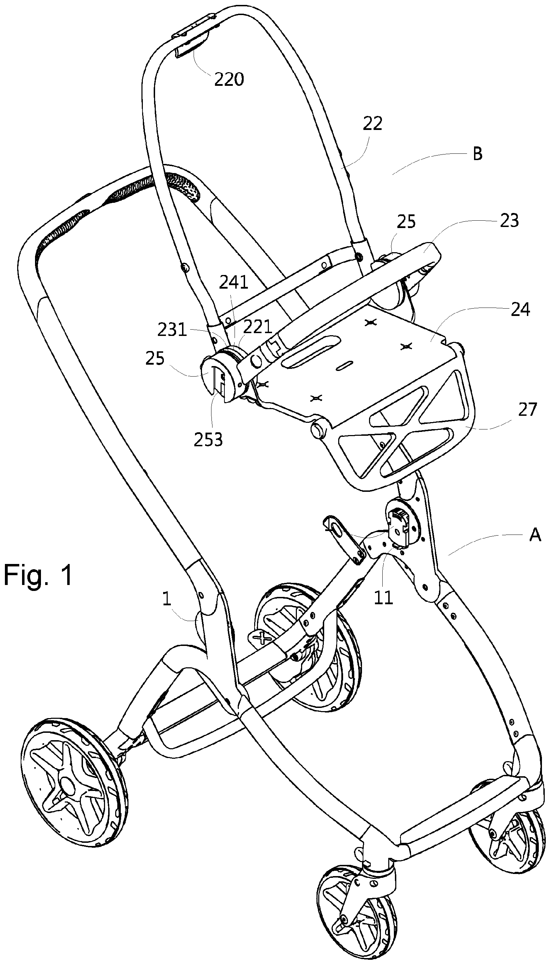

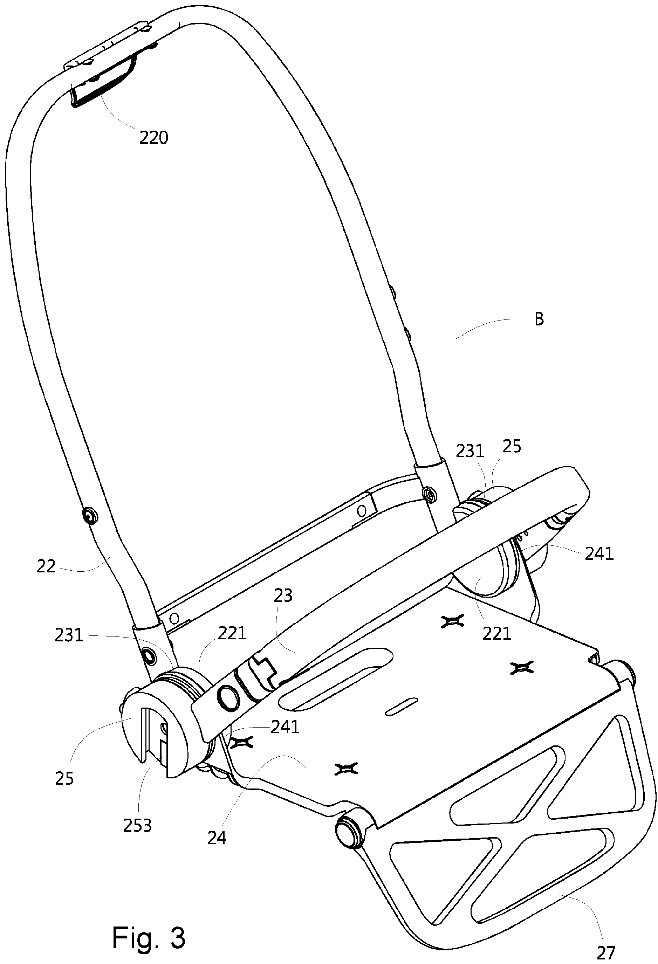

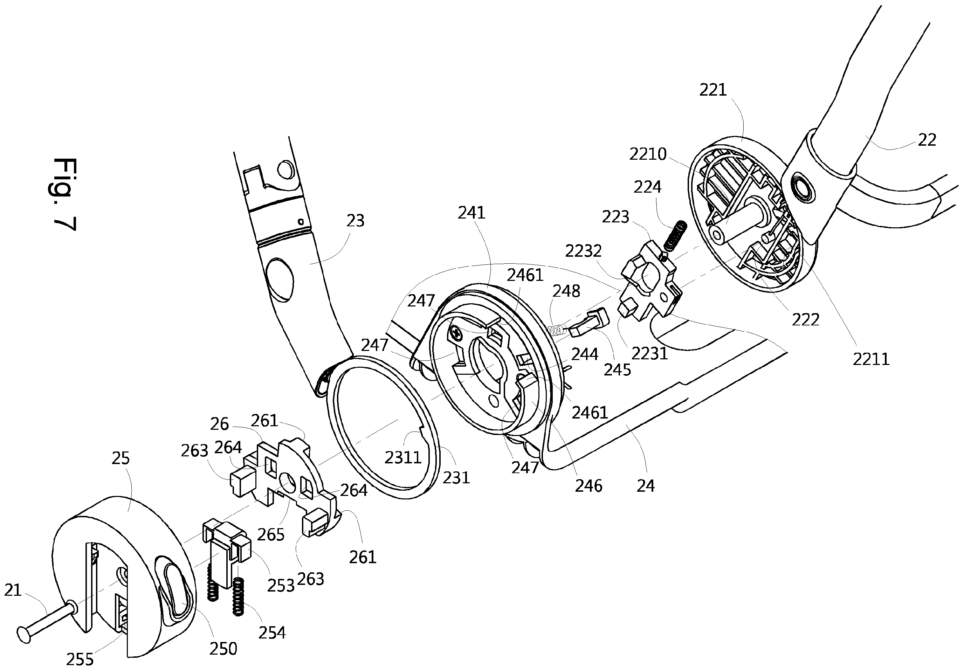

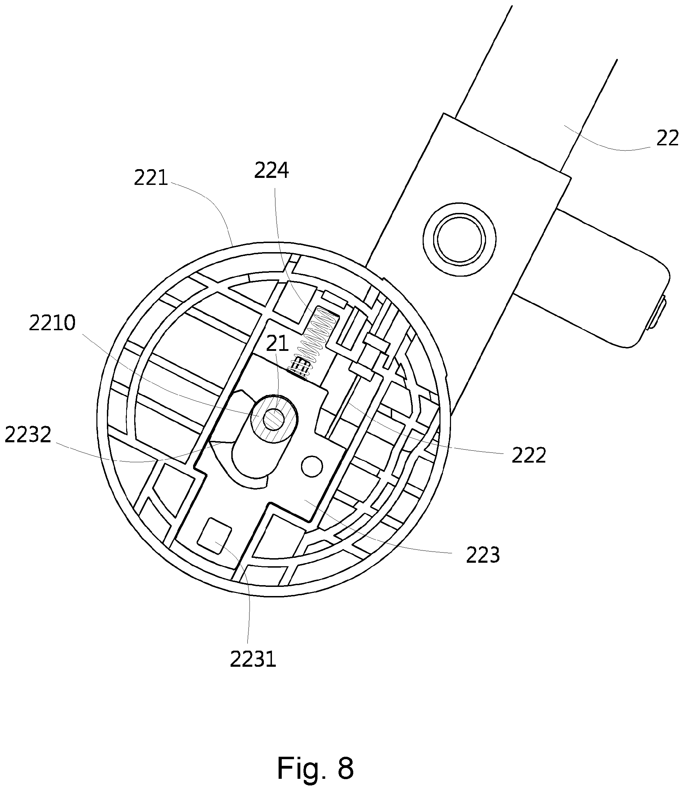

Referring to Figs.1 ~ 3, in the present invention, the two sides of the foldable frame A are configured with seat connectors 1 that are connected to a seat B. At corresponding positions, the two sides of the seat B are configured with frame connectors 25 that match and link the seat connectors 1. Thus, the seat B can be freely attached to or detached from the carriage frame A. The seat connector 1of the frame A is configured with an unlocking linkage component 11, which can sink under pressure and can unlock the frame A so that it can be folded. At the corresponding position, the frame connector 25 of the seat B is configured with an unlocking component 253 which can press the unlocking linkage component 11 to sink; the seat B mainly comprises a seat back frame 22, a handhold frame 23 and a seat base 24, which are fixed together through pivotal connection. At the middle position of the upper end of the seat back frame 22, a controlling member 220 is configured to control turning and folding of the seat B. When turning and folding the seat B, the controlling member 220 will pull a steel cable 222 (as shown in Fig.7 or Fig.8).

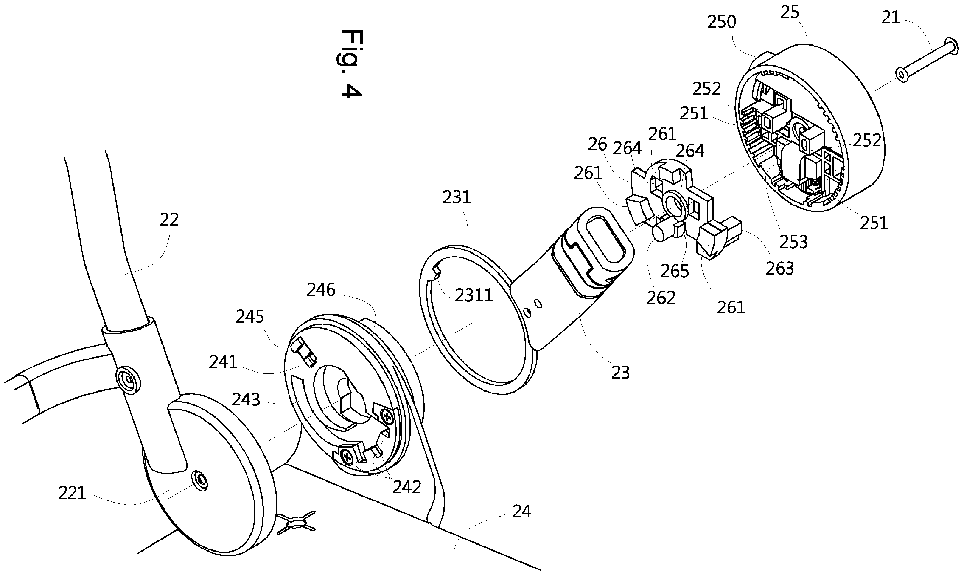

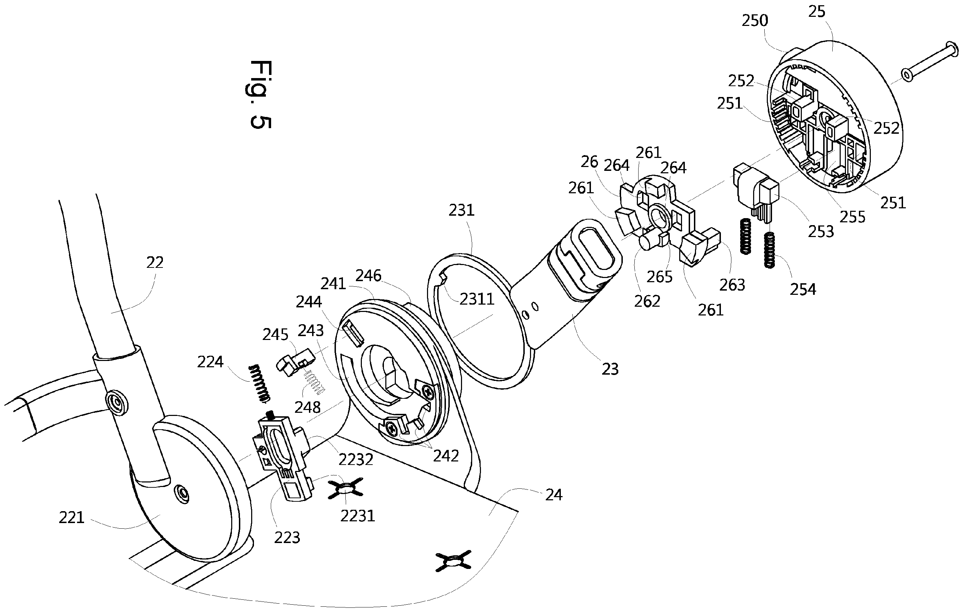

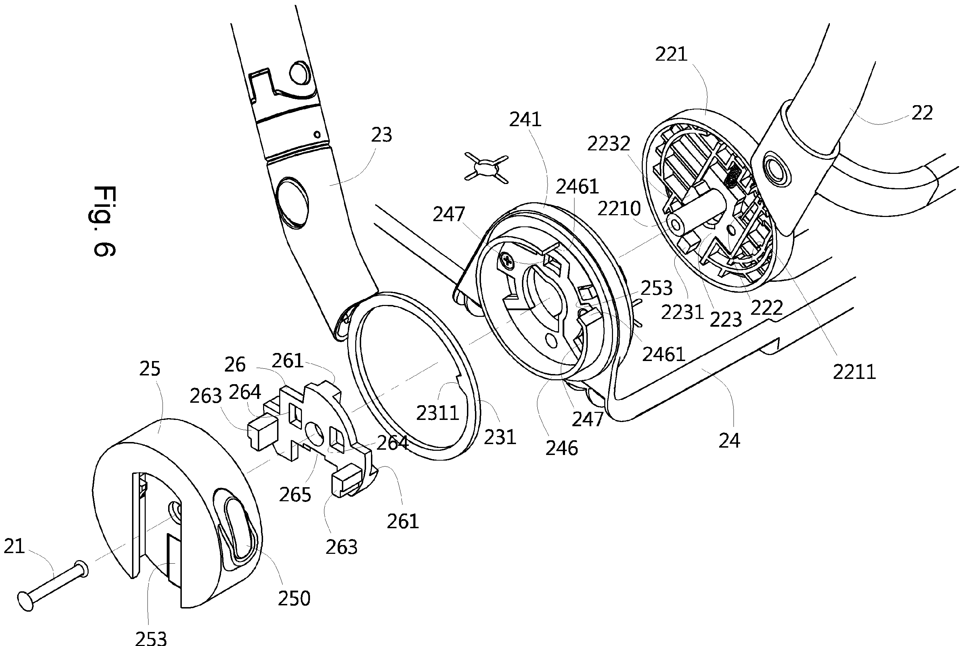

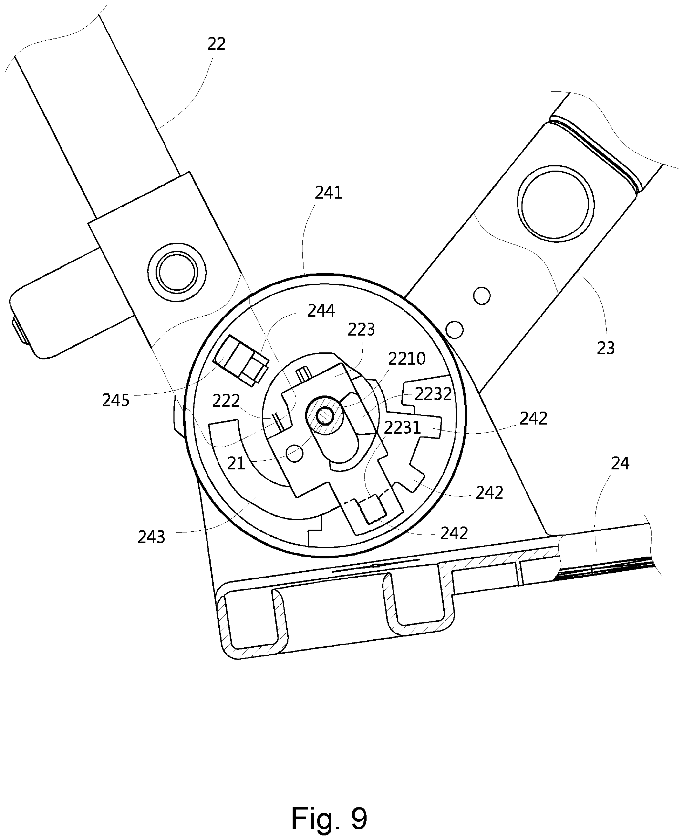

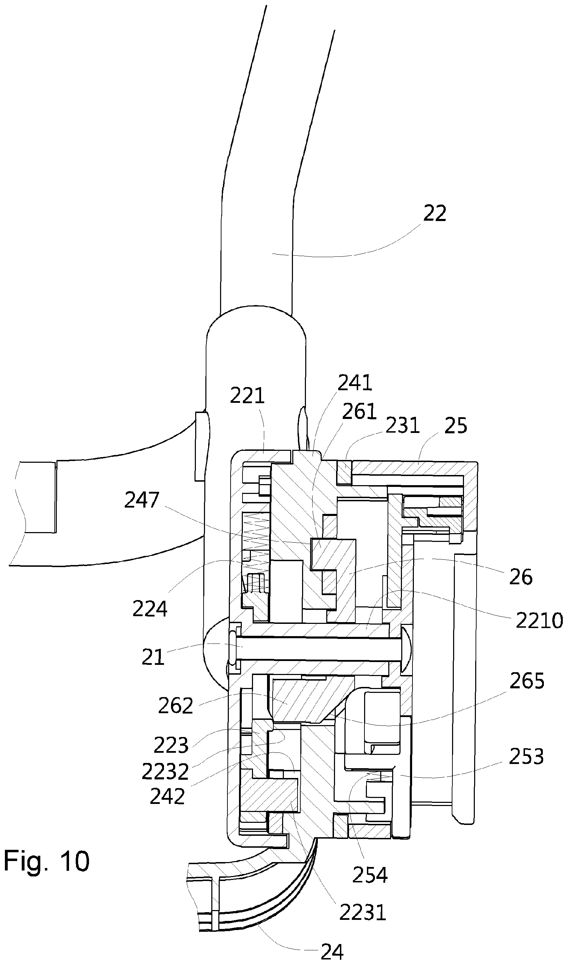

Further referring to Figs.4-10, the two sides of the seat back frame 22, the handhold frame 23 and the seat base 24 of the seat B are all configured with pivot rotation parts 221, 231, 241 matching each other and can be fixed through pivotal connection, and a pivot pin 21 is used to link the pivot rotation parts 221, 231, 241 and the frame connector 25 together. On the lower side of the inner side of the pivot rotation part 241 of the seat base 24 and at the position close to the outer periphery, a plurality of inclination fixing slots 242 are configured in continuous arrangements, and a folding guide groove 243 that continues to extend backward in the shape of an arc. Further, at the corresponding position on the side of the pivot rotation part 221 of the seat back frame 22, an unlocking driver 223 is housed, which slides linearly in the radial direction, and which can be automatically recovered under the pushing force from a spring 224. In the center part of the pivot rotation part 221, an axle portion 2210 is configured for said pivot pin 21 to go through and fix the components together. Said steel cable 222 goes from said controlling member 220, through the inside of the seat back frame 22 and to the pivot rotation part 221 and is connected to the unlocking driver 223. The terminal end of the unlocking driver 223 is configured with a tooth portion 2231, which can be embedded into the inclination fixing slot 242 or slide into the folding guide groove 243. In other words, when the steel cable 222 is pulled, the tooth portion 2231 of the unlocking driver 223 is released from the inclination fixing slot 242, so that the seat back frame 22 can be turned and be further embedded into a different inclination fixing slot 242 to reach a different inclination angle, or slide into the folding guide groove 243, so that the seat back frame 22 can be turned forward toward and join with the handhold frame 23.

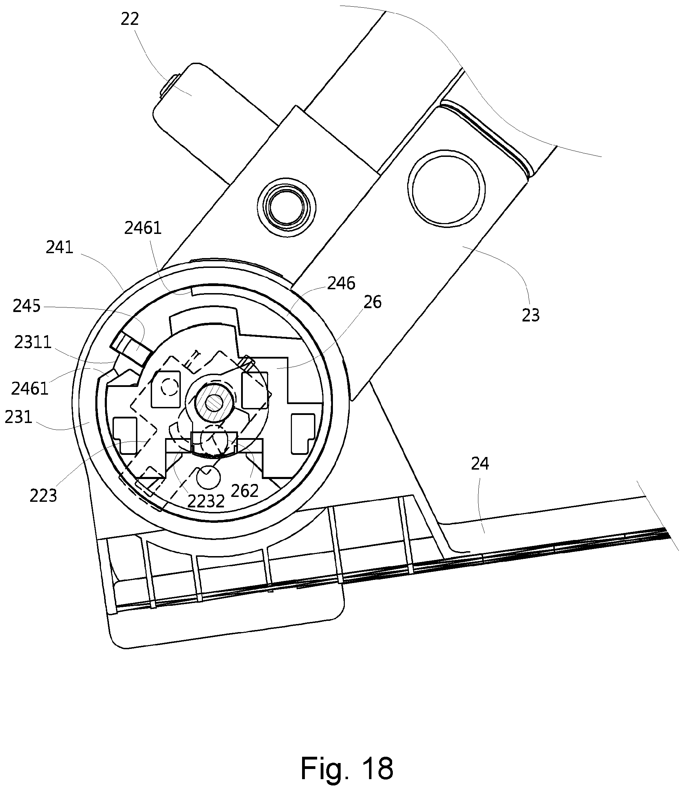

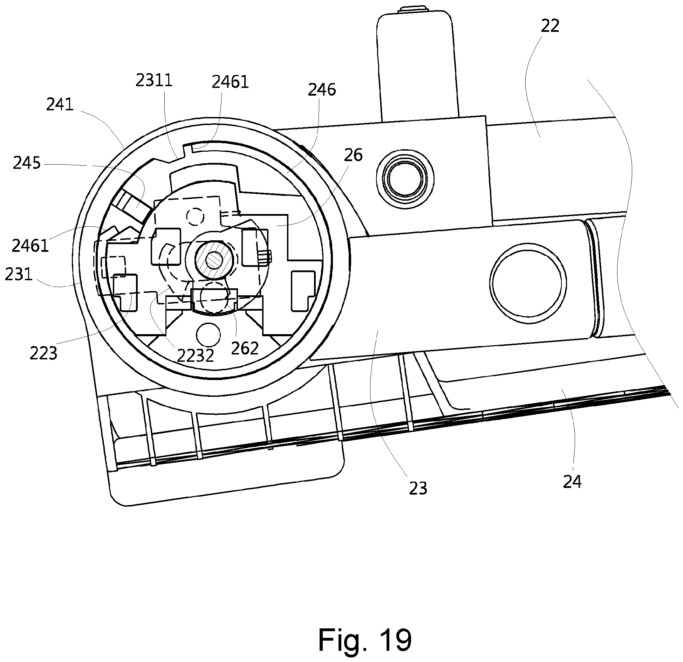

Further, inside the pivot rotation part 221 of said seat back frame 22, a radial pressing surface 2211 is configured, extending with gradually reduced distance from the center and then further extending with an equal distance. On the outer side of the unlocking driver 223 and at a position close to the center, a gradually rising axial pressing surface 2232 is configured. On the pivot rotation part 241 of the seat base 24, and at the position corresponding to the starting point of said radial pressing surface 2211, a housing hole 244 is configured. Inside the housing hole 244, a handhold locker 245 is held, with its two ends sticking out, and which is pushed outward by a spring 248. On the outer side of the pivot rotation part 241 and at a position close to the outer periphery, a flange 246 is configured, which has a notch to form two stopping surfaces 2461. The pivot shaft portion 231 at the terminal end of the handhold frame 23 is trapped on the flange 246 through pivotal connection. On the inner side of the pivot shaft portion 231, a convex stopping portion 2311 is configured, which can press on the outer side of the handhold locker 245 and one side of the stopping surface 2461 (as shown in Fig.18) at the same time. When the handhold frame 23 is turned to the position on the opposite side, it can also press on the corresponding side of the other stopping surface 2461 (as shown in Fig.19). The frame connector 25 configured on said seat B is also trapped on said flange 246 through pivotal connection and is capable of turning.

Further, on the end face of the outer side of the pivot rotation part 241 of the seat base 24, a plurality of positioning slots 247 are configured. On the internal end face of the frame connector 25, a plurality of guide holes 251 and convex guide portions 252 are configured. Further, a seat clamping piece 26 is provided between the pivot rotation part 241 of the seat base 24 and the frame connector 25. On the end face of the inner side of the seat clamping piece 26, a clasping convex portion 261 is configured, which can be embedded into said positioning slots 247. On the end face of its outer side, a convex guide portion 263 is configured, which can stick into said guide holes 251. At the position corresponding to the convex guide portion 252 configured on the end face of the inner side of the frame connector 25, the seat clamping piece 26 is configured with a guide hole 264 for it to stick in, so that the seat clamping piece 26 can have linear movement in the axial direction under the guide of the guide holes 251, 264 and the convex guide portions 252, 263; Moreover, on the end face of the inner side of the seat clamping piece 26 corresponding to the axial pressing surface 2232 of the unlocking driver 223, a convex pressing column 262 is configured, which can be pushed along the axial pressing surface 2232.

Further, on said frame connector 25, a locking member 250 is configured, which can be clasped with or released from the seat connector 1 of the frame A, and which is still housed inside the frame connector 25 and capable of linear sliding in the radial direction. Inside the frame connector 25, a spring 254 is provided, which can elastically push the unlocking component 253 to force it to withdraw. At the position corresponding to the top end of the inner side of the unlocking component 253, the seat clamping piece 26 is configured with a slant pressing surface 265, which is pressed on the unlocking component 253.

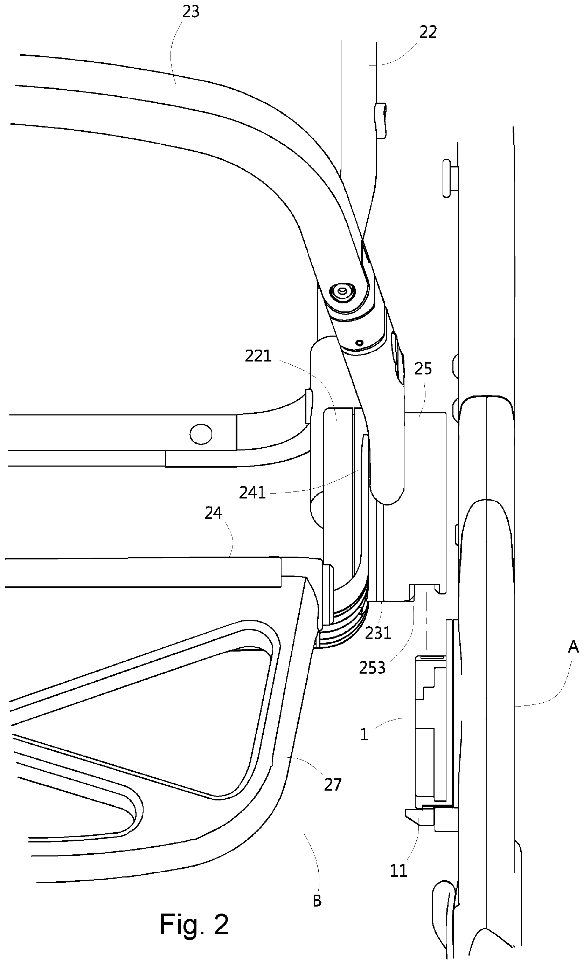

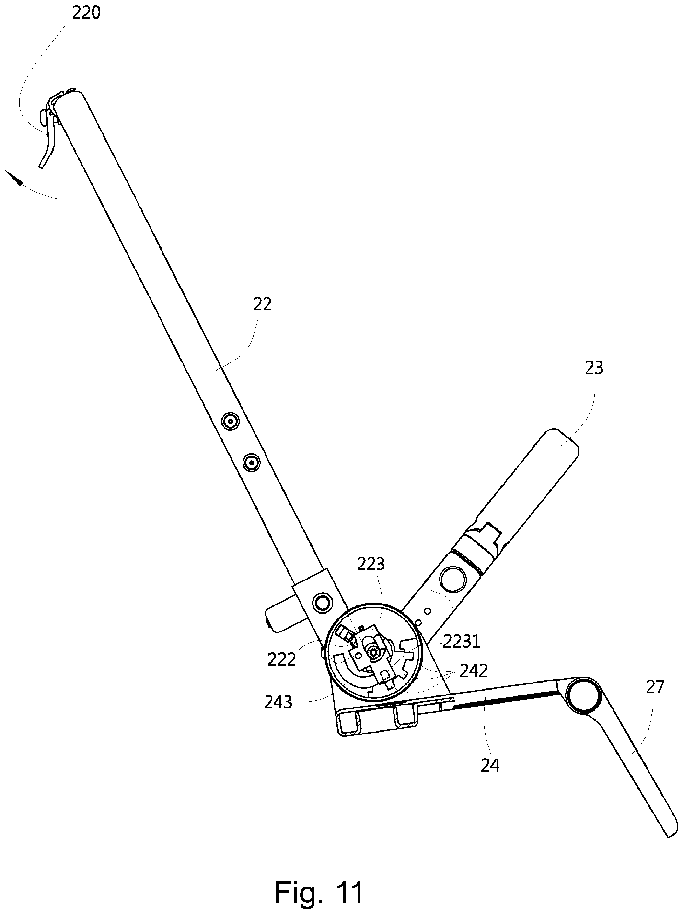

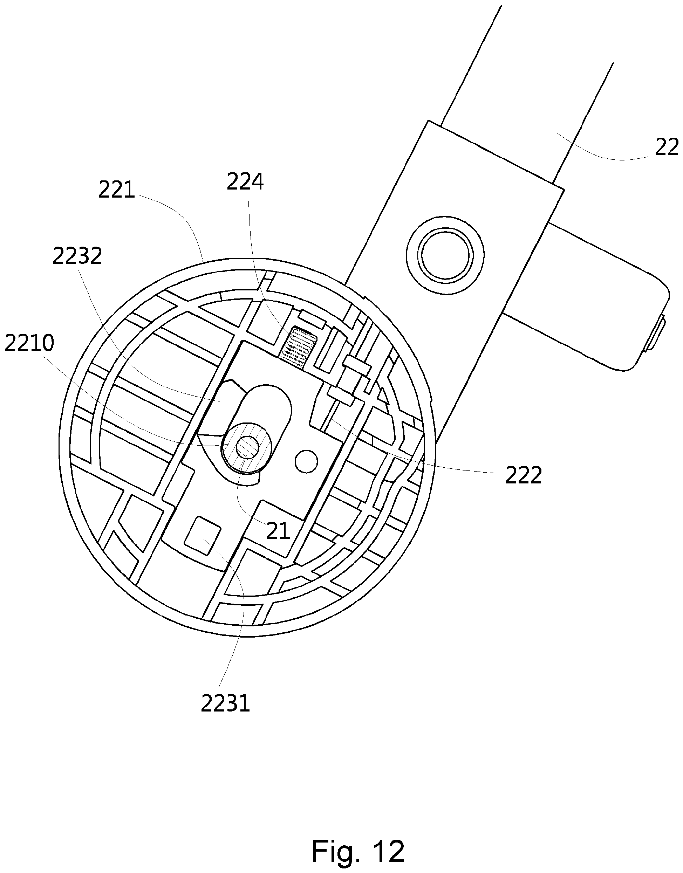

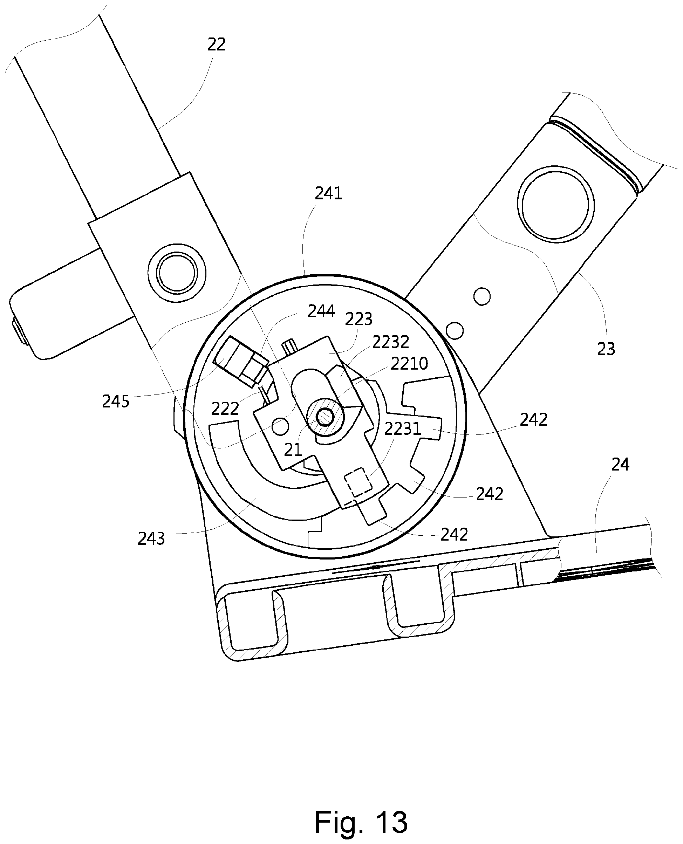

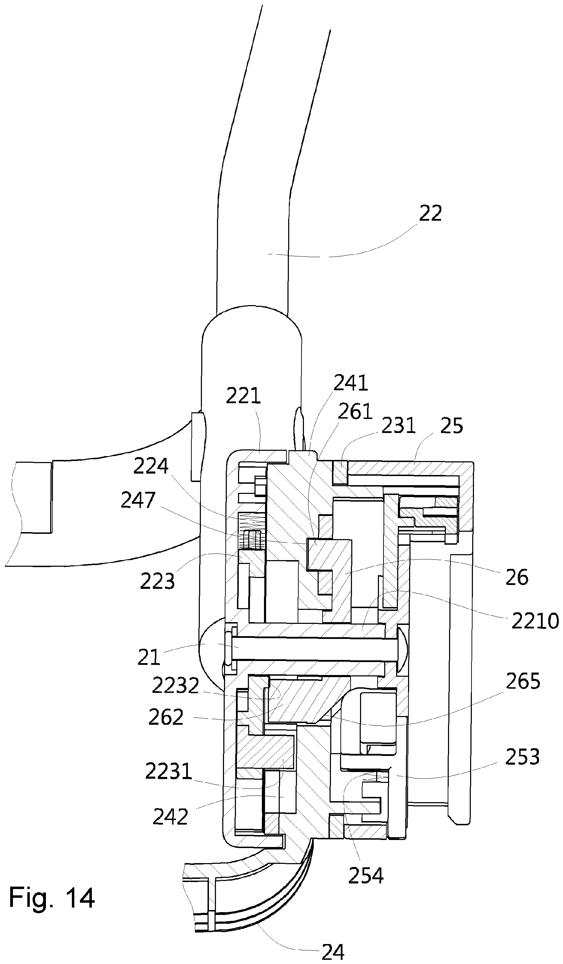

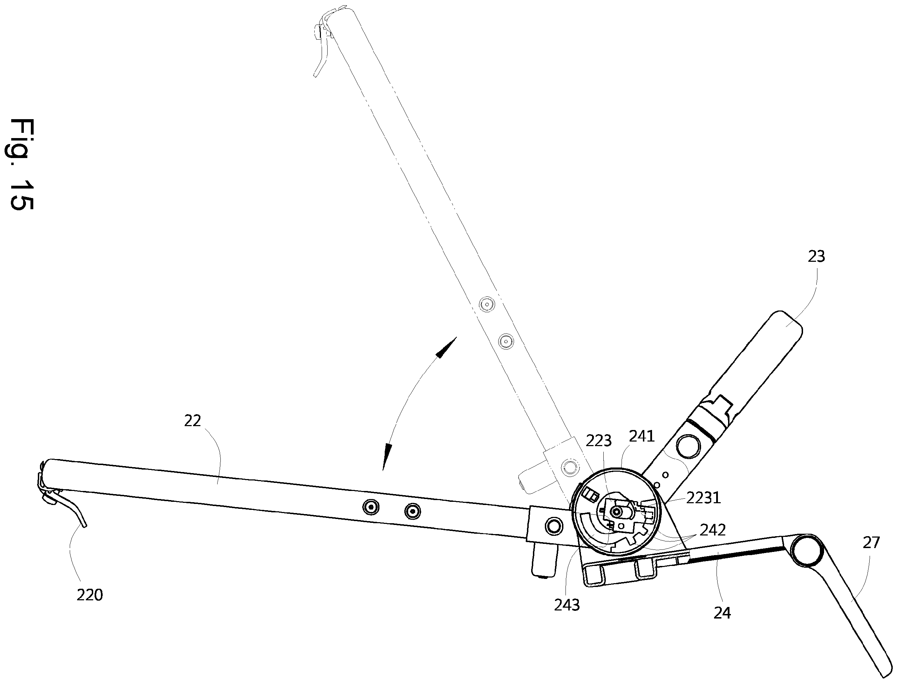

Thus, as shown in Figs.1 and 2, the seat B is locked on the carriage frame A through the frame connector 25, so that, using the frame connector 25 as the supporting component for pivotal rotation, the seat B can be turned and folded. When the user triggers the controlling member 220 on the upper end of the seat back frame 22, as shown in Figs.11~14, the steel cable 222 will be pulled upward, forcing the unlocking driver 223 to slide upward and the tooth portion 2231 on it will fall out of the inclination fixing slot 242 of the pivot rotation part 241 of the seat base 24, so that the seat back frame 22 can be turned up and down in the backward direction, as shown in Fig.15. During the turning, the tooth portion 2231 will further be embedded into the inclination fixing slots 242 at different positions. Thus, adjustment of different inclination angles of the seat back frame 22 can be made.

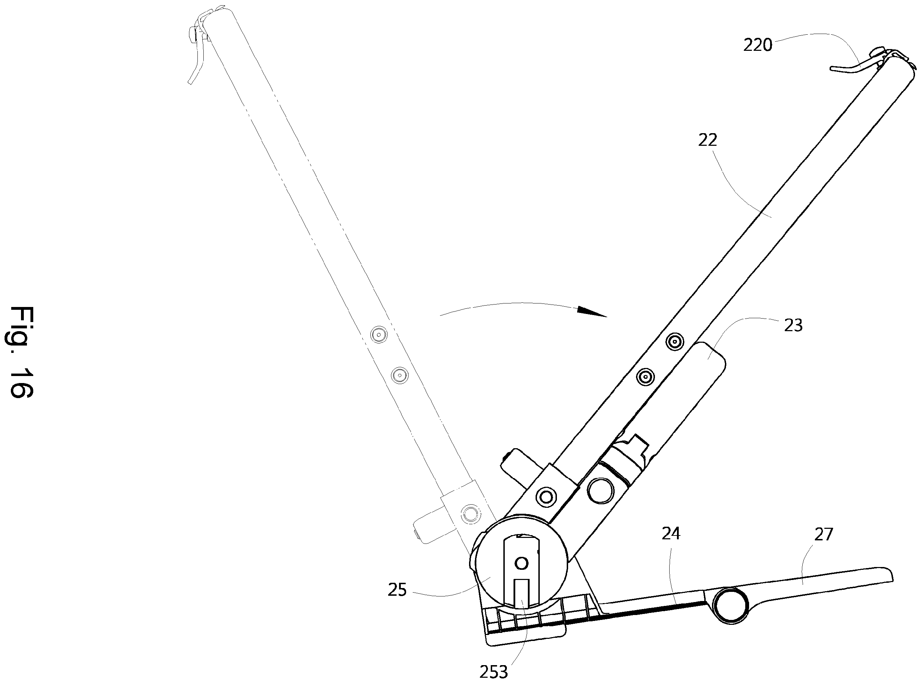

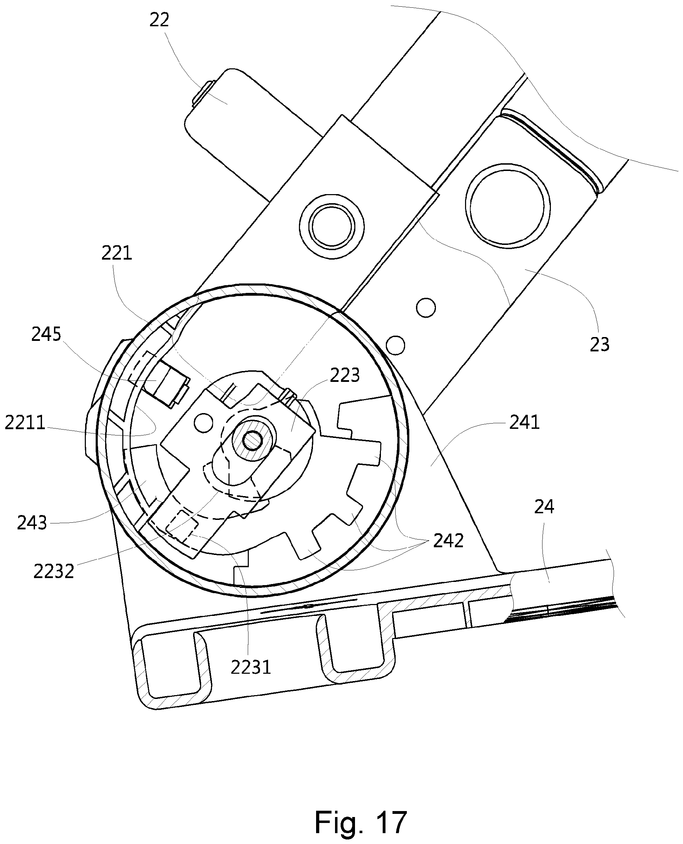

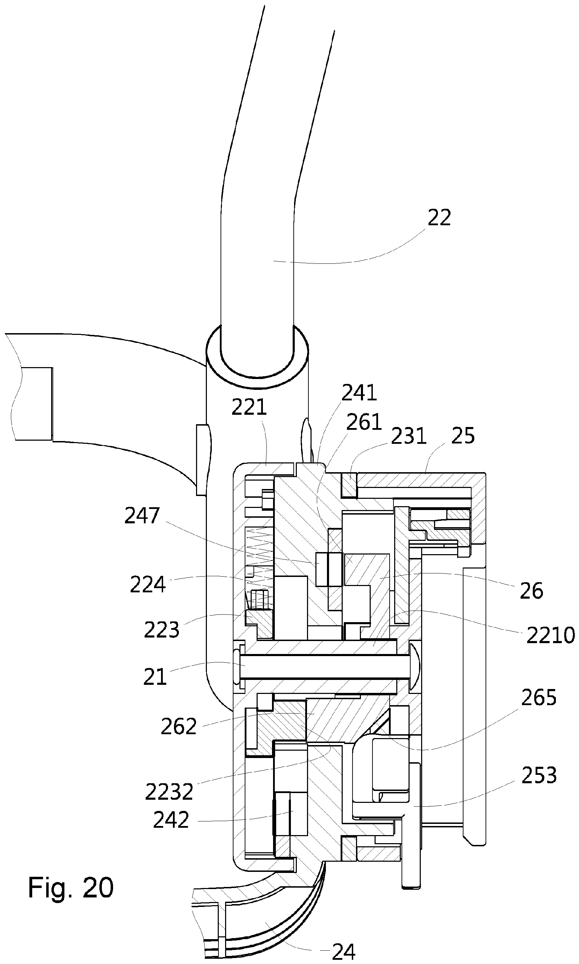

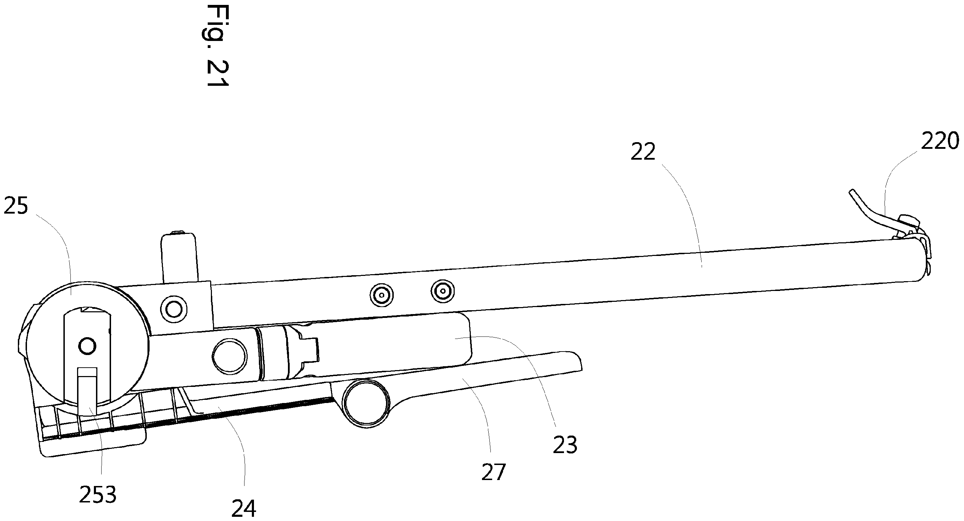

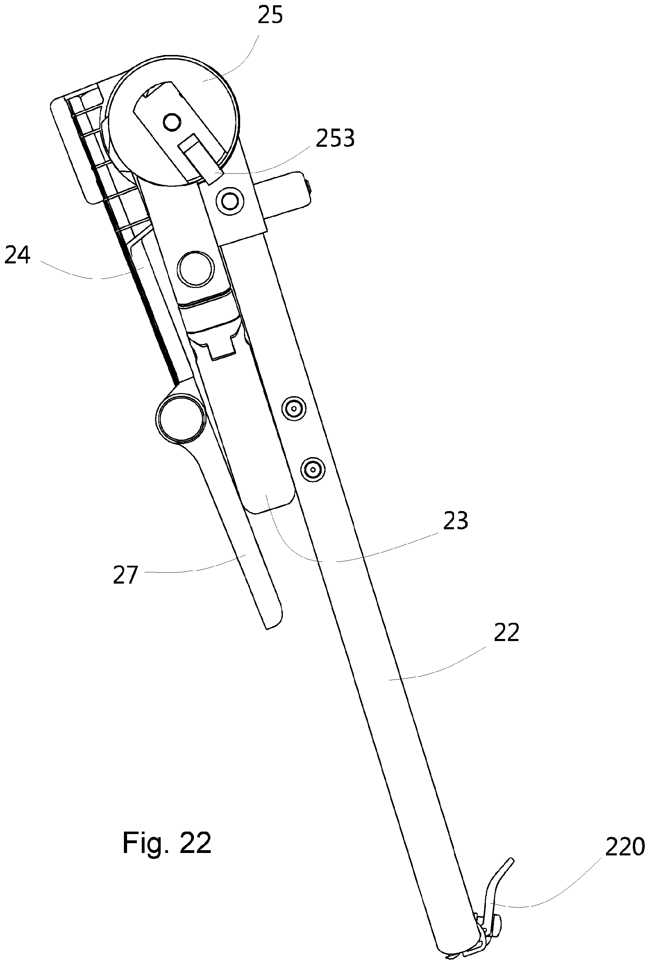

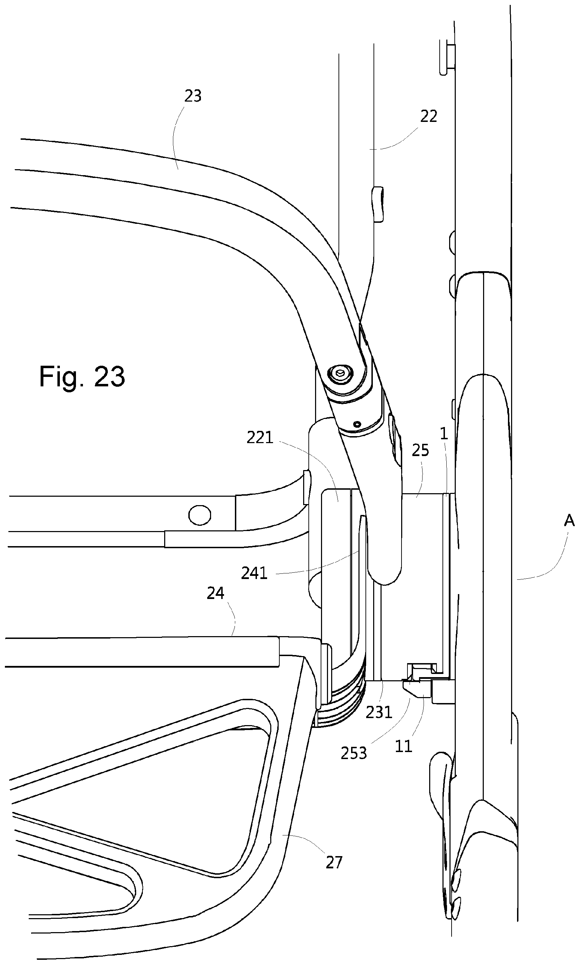

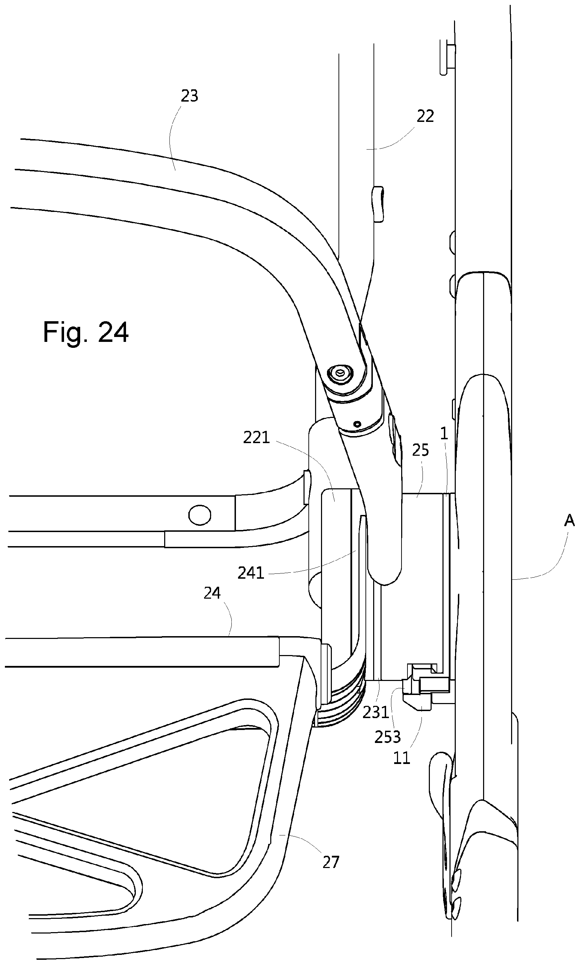

However, as shown in Fig.16, if the seat back frame 22 is turned further forward and approaches the handhold frame 23, the tooth portion 2231 on the unlocking driver 223 shown in Fig.17 will slide into the folding guide groove 243 of the pivot rotation part 241 of the seat base 24. Until the seat back frame 22 joins with the handhold frame 23, the following actions will simultaneously happen:
1. As shown in Fig.17, when the seat back frame 22 is turned forward, the end face of the inner side of the handhold locker 245 housed in the pivot rotation part 241 of the seat base 24 will be pushed along the radial pressing surface 2211 on the pivot rotation part 221 of the seat back frame 22. Thus, as shown in Fig.18, the handhold locker 245 will gradually sink and withdraw and its outer end will be released from the stopping portion 2311 of the pivot rotation part 231 of the handhold frame23. And then, as shown in Fig.19, the handhold frame 23 can be turned together with the seat back frame 22 toward the seat base 24.
2. When the seat back frame 22 is turned forward, as shown in Figs.18~20, the axial pressing surface 2232 configured on the end face of the unlocking driver 223 housed inside the pivot rotation part 221, which turns simultaneously, will push the pressing column 262 configured on the end face of the inner side of the seat clamping piece 26 in the axial direction, forcing the seat clamping piece 26 to slide outward in the axial direction. Subsequently, the clasping convex portion 261 on it will be released from the positioning slots 247 configured on the end face of the pivot rotation part 241 of the seat base 24. As shown in Figs.21 and 22, the seat base 24 can be further turned downward together with the handhold frame 23 and the seat back frame 22, and come close to the carriage frame A.
3. Further, as shown in Fig.20, when said seat clamping piece 26 slides outward along the axial direction, the slant pressing surface 265 configured on it will push the top end of the unlocking component 253 housed inside the frame connector 25, forcing the unlocking component 253 to move downward in the radial direction. As shown in Figs.23 and 24, its lower end will extend out from the frame connector 25, and be pushed toward the unlocking linkage component 11 on the seat connector 1 of the carriage frame A. When the unlocking linkage component 11 is pressed, the carriage frame A will be unlocked and can be folded.

Therefore, through the various components configured on the pivot rotation parts 221, 231, 241 that connect the seat back frame 22, the handhold frame 23 and the seat base 24 of said seat B through pivotal connection, the seat back frame 22 can be turned backward to reach different inclination angles. Moreover, when the seat back frame 22 is turned forward, the handhold frame 23 and the seat base 24 will move simultaneously toward the frame A and be folded. It will unlock the frame A for folding. That is to say, without detaching the seat B, the whole frame A of the baby carriage can be folded together. The operation of folding a baby carriage becomes simple and easy.

## Claims

1. A detachable seat that is adapted to drive unlocking and folding of a baby carriage frame, the seat comprising a seat back frame (22), a handhold frame (23), a seat base (24) and a frame connector (25); the seat back frame (22), the handhold frame (23) and the seat base (24) are each configured with a pivot rotation part (221, 231, 241) to be linked with the frame connector (25) through pivotal connection;
the upper end of the seat back frame (22) is configured with a controlling member (220) that can be turned to pull a steel cable (222); the steel cable (222) goes through the inside of the seat back frame (22) and is extended to the pivot rotation part (221) of the seat back frame (22);
wherein at the position adjacent to the outer periphery of the pivot rotation part (221) of the seat back frame (22), a radial pressing surface (2211) is configured, extending with gradually reduced distance from the center and then further extending with an equal distance; inside the pivot rotation part (221) of the seat back frame (22), an unlocking driver (223) is configured, which is connected to the terminal end of the steel cable (222), and which is capable of elastic recovery and sliding in the radial direction; the side of the unlocking driver (223) is configured with a gradually rising axial pressing surface (2232) and its terminal end is configured with a tooth portion (2231);
on the side of the pivot rotation part (241) of the seat base (24) corresponding to the pivot rotation part (221) of the seat back frame (22) and at a position adjacent to the outer periphery, a plurality of inclination fixing slots (242) are configured in continuous arrangements for the tooth portion (2231) of the unlocking driver (223) to embed in, and continuously configured with a folding guide groove (243) for the tooth portion (2231) to slide in; on the side of the pivot rotation part (241) of the seat base (24) corresponding to the pivot rotation part (231) of the handhold frame (23), a flange (246) and a plurality of positioning slots (247) are configured; on the side of the pivot rotation part (241) of the seat base (24), a housing hole (244) is provided, wherein inside the housing hole (244), a handhold locker (245) is contained, with its two ends sticking out and capable of elastic rising and sinking;
the pivot rotation part (231) of the handhold frame (23) is sheathed on the flange (246); inside the pivot rotation part (231) of the handhold frame (23), a stopping portion is configured, which can press on the handhold locker (245) when it rises;
inside the frame connector (25), a seat clamping piece (26) is configured, which can slide linearly along the axial direction; on the end face of the inner side of the seat clamping piece (26), a clasping convex portion (261) is configured, which can be embedded into one of the positioning slots (247), and a pressing column is configured, which can press on the axial pressing surface of the unlocking driver (223); in the center of the lower end of the seat clamping piece (26), a slant pressing surface (265) is configured; at the position corresponding to the slant pressing surface (265), the frame connector (25) is configured with an unlocking component (253), which can slide in the radial direction and is capable of elastic recovery; the upper end of the unlocking component (253) is pressed on the slant pressing surface (265) of the seat clamping piece (26);
the controlling member (220) on the seat back frame (22) can pull the unlocking driver (223) for adjustment of different inclination of the seat back frame (22) in the backward direction; through the controlling member (220), when the seat back frame (22) is turned forward to join with the handhold frame (23), the pivot rotation part (221) of the seat back frame (22) and the unlocking driver (223) will turn simultaneously, the radial pressing surfaces and the axial pressing surfaces on them will push the handhold locker (245) as well as the seat clamping piece (26), so that the seat back frame (22) will move together with the handhold frame (23) toward the seat base (24) and be folded together; the slant pressing surface (265) of the seat clamping piece (26) will push the unlocking component (253) and force it to stick out.

## Patentansprüche

1. Ein abnehmbarer Sitz, der angepasst ist, um das Entriegeln und Zusammenklappen eines Kinderwagenrahmens zu steuern, wobei der Sitz einen Rückenlehnenrahmen (22), einen Haltegriffrahmen (23), eine Sitzfläche (24) und einen Rahmenverbinder (25) umfasst; wobei der Rückenlehnenrahmen (22), der Haltegriffrahmen (23) und die Sitzfläche (24) mit je einem Schwenkdrehteil (221, 231, 241) ausgestattet sind, um mit dem Rahmenverbinder (25) verbunden zu werden;
wobei das obere Ende des Rückenlehnenrahmens (22) mit einem Steuerelement (220) aufgebaut ist, das gedreht werden kann, um ein Stahlkabel (222) zu ziehen; wobei das Stahlkabel (222) durch das Innere das Rückenlehnenrahmens (22) verläuft und sich zu dem Schwenkdrehteil (221) des Rückenlehnenrahmens (22) hin erstreckt;
wobei an der Position neben dem Außenumfang des Schwenkdrehteils (221) des Rückenlehnenrahmens (22) eine radiale Druckfläche (2211) aufgebaut ist, die sich mit einem allmählich verringerten Abstand von der Mitte erstreckt und sich dann weiter mit einem gleichen Abstand erstreckt; wobei im Schwenkdrehteil (221) des Rückenlehnenrahmens (22) ein Entriegelungsmitnehmer (223) vorgesehen ist, der mit dem abschließenden Ende des Stahlkabels (222) verbunden ist und imstande ist, sich elastisch zurückzuziehen und in radialer Richtung zu gleiten; wobei die Seite des Entriegelungsmitnehmers (223) mit einer allmählich ansteigenden axialen Druckfläche (2232) ausgestattet ist und sein abschließendes Ende mit einem Zahnabschnitt (2231) konfiguriert ist;
wobei auf der Seite des Schwenkdrehteils (241) der Sitzfläche (24), die dem Schwenkdrehteil (221) des Rückenlehnenrahmens (22) entspricht, und an einer Position neben dem Außenumfang mehrere Neigungsfixierschlitze (242) in durchgehenden Anordnungen zum Einbetten des Zahnabschnitts (2231) des Entriegelungsmitnehmers (223) und durchgehend mit einer Faltführungsnut (243) zum Hineingleiten des Zahnabschnitts (2231) vorgesehen sind; wobei auf der Seite des Schwenkdrehteils (241) der Sitzfläche (24), die zum Schwenkdrehteil (231) des Handgriffrahmens (23) passt, ein Flansch (246) und eine Vielzahl von Positionierungsschlitzen (247) konfiguriert sind; wobei auf der Seite des Schwenkdrehteils (241) der Sitzfläche (24) ein Aufnahmeloch (244) vorgesehen ist, wobei innerhalb des Aufnahmelochs (244) ein Haltegriffschloss (245) enthalten ist, dessen zwei Enden herausragen, die elastisch ansteigen und absinken können;
wobei das Schwenkdrehteil (231) des Handgriffrahmens (23) den Flansch (246) ummantelt; wobei im Inneren des Schwenkdrehteils (231) des Handgriffrahmens (23) ein Arretierteil vorgesehen ist, das beim Anheben Druck auf das Handgriffschloss (245) ausüben kann;
wobei innerhalb des Rahmenverbinders (25) ein Sitzklemmstück (26) vorgesehen ist, das linear entlang der axialen Richtung gleiten kann; wobei an der Stirnseite der Innenseite des Sitzklemmstücks (26) ein klammernder konvexer Abschnitt (261) ausgebildet ist, der in einen der Positionierungsschlitze (247) einbettbar ist und wobei eine Drucksäule vorgesehen ist, die Druck auf die axiale Druckfläche des Entriegelungsmitnehmers (223) ausüben kann; wobei in der Mitte des unteren Endes des Sitzklemmstücks (26) eine schräge Druckfläche (265) ausgebildet ist; wobei an der Position, die der geneigten Druckfläche (265) entspricht, der Rahmenverbinder (25) mit einem Entriegelungsmitnehmer (253) vorgesehen ist, der in radialer Richtung gleiten kann und zu einer elastischen Rückstellung fähig ist; wobei das obere Ende des Entriegelungsmitnehmers (253) auf die schräge Druckfläche (265) des Sitzklemmstücks (26) gedrückt wird;
wobei das Steuerelement (220) an dem Rückenlehnenrahmen (22) den Entriegelungsmitnehmer (223) zum Einstellen unterschiedlicher Neigungen des Rückenlehnenrahmens (22) nach hinten ziehen kann; wobei, wenn der Rückenlehnenrahmen (22) nach vorne gedreht wird, um sich mit dem Halterahmen (23) zu verbinden durch das Steuerelement (220) das Schwenkdrehteil (221) des Rückenlehnenrahmens (22) und der Entriegelungsmitnehmer (223) sich gleichzeitig drehen, wobei die radialen Druckflächen und die sich darauf befindenden axialen Druckflächen die Griffsperre (245) sowie das Sitzklemmstück (26) drücken, so dass sich der Rückenlehnenrahmen (22) zusammen mit dem Griffrahmen (23) in Richtung der Sitzfläche (24) bewegt und zusammengeklappt wird; wobei die schräge Druckfläche (265) des Sitzklemmstücks (26) auf den Entriegelungsmitnehmer (253) Druck ausübt und dazu zwingt herauszustehen.

## Revendications

1. Siège amovible qui est conçu pour entraîner en déverrouillage et pliage un châssis de poussette, le siège comprenant un dossier de cadre de siège (22), un cadre de prise manuelle (23), une base de siège (24) et un connecteur de cadre (25) ; le dossier de cadre de siège (22), le cadre de prise manuelle (23) et la base de siège (24) sont chacun configurés avec une partie tournante pivotante (221, 231, 241) à relier au connecteur de cadre (25) à travers une connexion pivotante ;
l'extrémité supérieure du dossier de cadre de siège (22) est configurée avec un élément de commande (220) qui peut être tourné pour tirer un câble en acier (222) ; le câble en acier (222) va à travers l'intérieur du dossier de cadre de siège (22) et est déployé jusqu'à la partie tournante pivotante (221) du dossier de cadre de siège (22) ;
dans lequel une surface de pression radiale (2211) est configurée au niveau de la position située à côté de la périphérie extérieure de la partie tournante pivotante (221) du dossier de cadre de siège (22), ladite surface s'étendant avec une distance graduellement réduite par rapport au centre puis s'étendant encore avec une distance égale ; un entraîneur de déverrouillage (223) est configuré à l'intérieur de la partie tournante pivotante (221) du dossier de cadre de siège (22), ledit entraîneur étant relié à l'extrémité terminale du câble en acier (222) et étant capable d'une certaine reprise élastique et de coulisser dans la direction radiale ; le côté de l'entraîneur de déverrouillage (223) est configuré avec une surface de pression radiale (2232) augmentant graduellement et son extrémité terminale est configurée avec une partie dentée (2231) ;
sur le côté de la partie tournante pivotante (241) de la base de siège (24) correspondant à la partie tournante pivotante (221) du dossier de cadre de siège (22) et au niveau d'une position située à côté de la périphérie extérieure, une pluralité de fentes de fixation d'inclinaison (242) sont configurées de façon à ce que des agencements continus pour la partie dentée (2231) de l'entraîneur de déverrouillage (223) s'encastrent dedans et sont configurées en continu avec une rainure de guidage de pliage (243) pour faire coulisser la partie dentée (2231) sur le côté de la partie tournante pivotante (241) de la base de siège (24); une bride (246) et une pluralité de fentes de positionnement (247) sont configurées sur le côté correspondant à la partie tournante pivotante (231) du cadre de prise manuelle (23) ; un trou de carter (244) est prévu sur le côté de la partie tournante pivotante (241) de la base de siège (24), un système de verrouillage de prise manuelle (245) étant contenu à l'intérieur du trou de carter (244), avec ses deux extrémités saillantes et capables de se soulever et de s'abaisser de façon élastique ;
la partie tournante pivotante (231) du cadre de prise manuelle (23) est gainée sur la bride (246); une partie de butée est configurée à l'intérieur de la partie tournante pivotante du cadre de prise manuelle (23), ladite partie pouvant appuyer sur le système de verrouillage de prise manuelle (245) lorsque celui-ci se soulève ;
une pièce de serrage de siège (26) est configurée à l'intérieur du connecteur de cadre (25), ladite pièce pouvant coulisser de façon linéaire le long de la direction axiale; une partie convexe de serrage (261) est configurée sur le côté d'extrémité du côté intérieur de la pièce de serrage de siège (26), ladite partie pouvant être encastrée dans une des fentes de positionnement (247) et une colonne de compression est configurée qui peut appuyer sur la surface de pression radiale de l'entraîneur de déverrouillage (223); une surface de pression inclinée (265) est configurée dans le centre de l'extrémité inférieure de la pièce de serrage de siège (26) ; au niveau de la position correspondant à la surface de pression inclinée (265), le connecteur de cadre (25) est configuré avec un élément de déverrouillage (253) qui peut coulisser dans la direction radiale et est capable de reprise élastique ; l'extrémité supérieure de l'élément de déverrouillage (253) est pressée sur la surface de pression inclinée (265) de la pièce de serrage de siège (26) ;
l'élément de commande (220) sur le dossier de cadre de siège (22) peut tirer l'entraîneur de déverrouillage (223) pour le réglage des différentes inclinaisons du dossier de cadre de siège (22) dans la direction arrière ; à travers l'élément de commande (220), lorsque le dossier de cadre de siège (22) est tourné vers l'avant pour joindre le cadre de prise manuelle (23), la partie tournante pivotante (221) du dossier de cadre de siège (22) et l'entraîneur de déverrouillage (223) tournent simultanément, les surfaces de pression radiales et les surfaces de pression radiales placées dessus poussent le système de verrouillage de prise manuelle (245) ainsi que la pièce de serrage de siège (26), de sorte que le dossier de cadre de siège (22) se déplace conjointement avec le cadre de prise manuelle (23) en direction de la base de siège (24) et qu'ils soient pliés ensemble ; la surface de pression inclinée (265) de la pièce de serrage de siège (26) pousse l'élément de déverrouillage (253) et le contraint à ressortir.
